# EUROPEAN PATENT SPECIFICATION

(11) **EP 3 700 244 B1**
(45) Date of publication and mention of the grant of the patent: **30.12.2020**
(21) Application number: 20169826.3
(22) Date of filing: 20.07.2007
(51) Int. Cl.: H04W 12/04, H04L 29/06, H04W 12/08, H04L 29/08, H04L 12/28, H04W 84/18, H04W 92/02, H04W 12/00

(54) **INFORMATION SHARING IN A SMART SPACE**
GEMEINSAME INFORMATIONSNUTZUNG IN EINEM INTELLIGENTEN RAUM
PARTAGE D'INFORMATION DANS UN ESPACE INTELLIGENT

(43) Date of publication of application: 26.08.2020
(62) Document number(s) of the earlier application(s) in accordance with Art. 76 EPC: 18168968.8 / 3 386 228; 07788808.9 / 2 171 620
(73) Proprietor: Nokia Technologies Oy, 02610 Espoo (FI)
(72) Inventor: PALIN, Arto, 37830 Viiala (FI); REUNAMÄKI, Jukka, 33820 Tampere (FI)
(74) Representative: Espatent Oy

(56) References cited:
- WO-A2-2006/106393
- WO-A2-2007/001629
- "Wi-Fi Protected Setup Specification Version 1.0h", , 31 December 2006 (2006-12-31), pages 1-110, XP055031152, Internet Retrieved from the Internet: URL:http://gpl.back2roots.org/source/puma5 /netgear/CG3200-1TDNDS_GPL/ap/apps/wpa2/or iginal/Wi-Fi Protected Setup Specification 1.0h.pdf [retrieved on 2012-06-26]

## Description

### FIELD OF THE INVENTION

The present invention generally relates to short range communications and a smart space type of environment. The invention relates particularly, though not exclusively, to sharing smart space information.

### BACKGROUND OF THE INVENTION

In general, short range communication technologies operate in short distances. Such technologies include for example Bluetooth, WLAN (wireless local area network), UWB (ultra-wideband, WUSB (wireless USB) and Wibree.

Short range communication technologies have enabled development of so called smart space environments. The definition of a smart space is many-sided, many times related to ubiquitous computing and smart networking. The term smart space is used herein to refer to a certain space that handles information in a somewhat smart way, either so that devices of the space are for example sharing information relating to connectivity, configuration, security or that the devices are sharing even information relating to actual data in an interoperable manner. In practice a smart space may be a relatively simple system or quite the opposite, a very complex system.

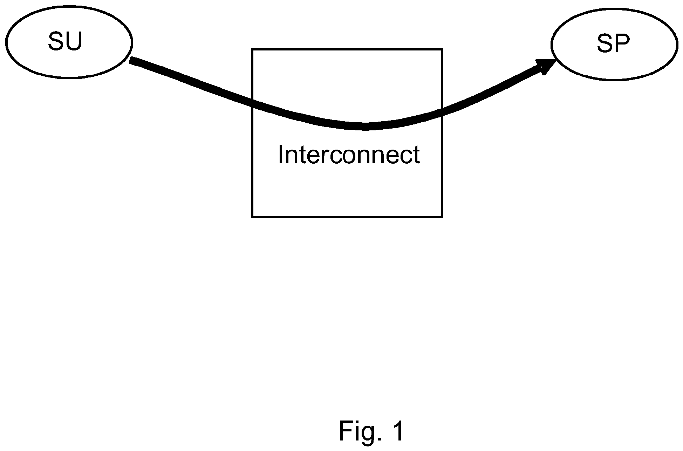

Basically in every smart space there is a Service Provider (SP) and a Service User (SU) and a way how the SP and SU can connect (or interconnect) with each other. This is depicted in Figure 1. In a simple form, the SP can be for example a Bluetooth printer and the SU for example a mobile terminal, and these devices are interconnected by a Bluetooth connection. This kind of example is easy to handle and can be built upon one connectivity technique. However, generally the SP could offer services over any type of connectivity technique. On the other hand, in some cases, the SP can utilize only some or none of them. How to find proper connectivity technique in this case is more complicated. Furthermore, there may be more than one SPs and SUs. Yet furthermore, mobile devices set limits for powering issues, which further complicates connectivity solutions.

As introduced above, devices in a smart space are operating in a "smart" manner. Ideally all devices are aware of the space, devices and services that are available and allowed to be used. A problem that is not fully considered in current implementations is how to easily adapt to changes in the environment, for example when entering a smart space or when moving from one smart space to another. For example, if a user moves to a meeting room, the user may want to obtain information pertaining to devices/services available in the meeting room. The user may want to know for example, which devices it may connect to (wired or wireless), how it should connect to those devices (available bearers, hidden names, password, security etc.), which services are available through the devices, and which services the user is allowed to use in the devices (e.g. wireless LAN connection, wireless projector etc.).

One known way of sharing smart space information, for example for persons entering the smart space, is to share it with paper notes or verbally. This kind of approach is however somewhat inconvenient, because paper notes get easily lost or it may be difficult to find the right person who is aware of available services in certain space.

Another option is that a device entering a smart space scans the surroundings to discover devices of the smart space and to find out, which bearers the devices have, which services are provided via them, and how to connect with them. Basically, the entering device has to scan the surroundings with each available bearer it has in order to find out whether there are any devices which use any of the available bearers. Because there is no standardized way to arrange this, each bearer has to be activated for a certain period of time to find out other devices. Due to powering issues and possible interference problems between concurrently operating radio technologies it may not be possible to use several bearers at the same time to find out connectivity information of the multiple other devices located in the smart space. This kind of scanning operation consumes a lot of power and may require significant amount of time. The result may yet be that not every device/service in the smart space is discovered.

Still another related solution is disclosed in "Using OWL in a Pervasive Computing Broker" by Harry Chen, Tim Finin and Anupam Joshi, available in http://www.csee.umbc.edu/pub/finin/papers/aamas03a.pdf. In the disclosed system, there are RFID sensors embedded in the walls of a smart space. As a person enters the smart space the RFID sensors detect that for example a cell phone belonging to that person has entered the space. Thereafter the smart space may be adapted to presence of that person. However, this kind of approach requires complicated arrangements within the smart space to provide the means to detect the presence of incoming and outgoing devices, which may make the arrangement costly and not being flexible to changes in configuration of the smart space.

WO 2006/106393 discloses an introducer device configured to control access to connectivity information. WO 2007/001629 discloses a concept for introducing a new device to a network by way of exchanging provisioning data between the new device and a verified (already connected) device. "Wi-Fi Protected Setup Specification", Version 1.0 by Wi-Fi Alliance, discusses standardizing a setup solution for Wi-Fi networks. The primary focus is in simplifying the security setup.

### SUMMARY

Now a new approach for sharing smart space information is presented.

According to a first aspect of the invention there is provided an apparatus, according to claim 1.

In an embodiment at least one of the following definitions applies to said first space: the space is a smart space, the space is defined by physical constraints, and the space comprises devices configured to offer services to one or more other devices within said space. Additionally or alternatively the first space may be a virtual space defined by virtual constraints.

The other devices to which the services are offered may be mobile or movable devices that may move into or out of the first space. Momentarily, such devices may be part of the (smart) space, e.g. as long as they stay within the space or as long as their existence in that space is allowed.

By using a near field connection for reading the information pertaining to the (smart) space one may achieve the benefit that the information can be read only when the reader is in the smart space, that is, the information may be tied into the space. If far field wireless signals (e.g. WLAN, Bluetooth and GSM) were used, the signals would penetrate through walls and ceiling, whereby it would be difficult to tie the user and the services into the same bounded space (e.g. meeting room). A further advantage that may be achieved is that as near field communication is enabled only when the devices are close to each other, the communication is inherently secure and strong authentication and security measures are not necessarily required. Still further, as the information is not shared to everyone, also security information, such as SSID (service set identifier) and security parameters of a WLAN access point, may be shared.

In an embodiment the apparatus of the first aspect is part of said personal space.

In an embodiment the devices of the personal space are trusted devices in view of said apparatus.

In an embodiment said processing unit is configured to forward said usage information over one or more secure links.

In an embodiment said processing unit is configured to selectively forward said usage information such that only information that may be useful for a certain device is forwarded to said certain device.

In an embodiment said processing unit is configured to forward all of said usage information to all devices of the personal space.

In an embodiment the processing unit is further configured to forward said usage information to a storage device in the personal space to be further distributed to one or more other devices of the personal space.

In an embodiment said processing unit is configured to forward said usage information over a Bluetooth, Wibree, UWB, WUSB and/or RFID connection or some other suitable connectivity technique.

The usage information may comprise for example information identifying devices within the first space, connectivity information, information pertaining to services provided by devices of the first space, setup information, information pertaining to security settings, or any combination thereof.

In an embodiment the storage module is an RFID tag and the near field connection is an RFID connection.

According to a second aspect of the invention there is provided a method, according to claim 7.

According to a third aspect of the invention is provided a computer program according to claim 12.

Various embodiments of the present invention have been illustrated only with reference to certain aspects of the invention. It should be appreciated that corresponding embodiments may apply to other aspects as well.

### BRIEF DESCRIPTION OF THE DRAWINGS

The invention will be described, by way of example only, with reference to the accompanying drawings, in which:
- Figure 1: shows interconnecting in a smart space environment;
- Figure 2: shows an example of a smart space in accordance with an embodiment;
- Figure 3: is a flow diagram illustrating a method in accordance with an embodiment; and
- Figure 4: shows a system comprising a reader device and a storage device in accordance with an embodiment.

### DETAILED SPECIFICATION

In the following example implementations of the invention are presented in connection with a smart space.

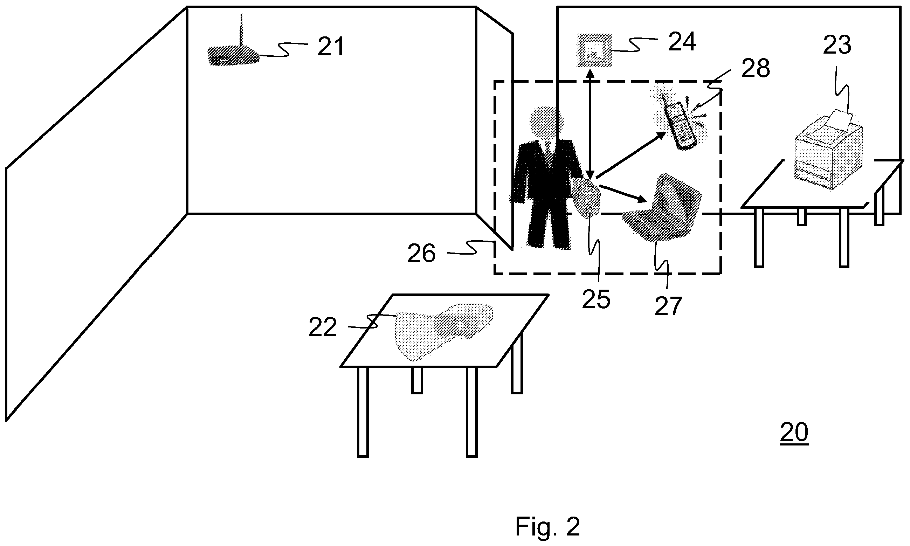

Turning to Figure 2, for the purpose of an embodiment, a room 20, for example a meeting room, is considered a smart space. The smart space comprises a WLAN access point 21, a wireless beamer 22 and a wireless printer 23. Each of the devices 21-23 of the smart space may provide different services to other devices or users and may have an ability to use a set of different bearers. In the context of the present invention, the word "bearer" is also understood to include passive technologies such as RFID (radio-frequency identification). Other devices that might be part of the smart space include for example an LCD (liquid crystal display) television, a DVD (digital versatile disk) player, various remote controls, a temperature sensor and so forth.

Further the smart space comprises an RFID tag 24. The tag 24 stores information pertaining to the devices of the smart space and services available in the smart space. The information may include connectivity information such as connectivity methods, like Ethernet, USB (universal serial bus), WLAN (wireless local area network), Bluetooth, UWB (ultra-wideband), WUSB (wireless USB), Wibree and/or connectivity parameters, like WLAN channel, WPA/WEP (Wi-Fi protected access / wired equivalent privacy) keys, Bluetooth access information etc. In an embodiment the tag stores a connectivity map relating to various connections between different devices of the smart space. The connectivity information stored in the tag may concern wireless or fixed line connections. Additionally, the connectivity information may concern connectivity information of the smart space as such (if networked), or it can be the connectivity information of the individual devices of the smart space. Hence, the connectivity information may include information regarding connectivity techniques supported by certain device(s) or it can even include information how devices are connected or could connect to each other, thus forming a kind of topology map of smart space connectivity between the devices of the smart space.

Furthermore the smart space information stored in the tag 24 may include link level security information, other security settings required for using one or more services, configuration setups/control information, or any combination thereof. As practical examples, the smart space information may comprise e.g. SSID and security parameters of the WLAN access point 21 or an address of the projector 22 and its capabilities. As another example the smart space information may provide a mapping between services and service bearers, such as, internet access is provided via the WLAN access point 21, wireless printing with the printer 23 is provided via Bluetooth connection and the wireless beamer 22 can be used via an UWB connection.

The smart space information stored in the tag may be static or dynamic. As the configuration of the smart space may change over time it may be beneficial to have a possibility to dynamically change the smart space information stored in the tag. It is possible that each device of the smart space updates its own information to the tag or that there is a centralized repository that collects the information and updates the tag. Also any suitable combination of these options or some other alternative is possible. As a practical example, access to the WLAN access point 21 of the meeting room may be protected with a key1 between 10 am and noon and with a key2 between noon and 2pm and so forth. In that case the WLAN access point might update the relevant key to the tag as the key changes. Settings of other devices of the smart space may change in a similar manner.

The dashed line illustrates a personal space 26 of a user entering the smart space. In the context of various embodiments of this invention the term personal space refers to devices personally held by a user. The personal space may comprise for example a laptop computer, a mobile phone, a wrist watch and/or a heart rate monitor as well as various other devices that are intended for personal use. In one embodiment, the devices of the personal space are "trusted devices", i.e. devices that are known beforehand. Additionally, there may be a security association between some or all of the devices of the personal space. That is, the devices of the smart space may be configured to communicate with each other over secure links. It must be noted that the security association may exist between all devices belonging to the smart space or only between some of the devices.

In Figure 2, the personal space comprises a laptop 27, a mobile phone 28 and a wrist watch 25. The wrist watch has near field communication capabilities and is configured to use a near field connection for reading the smart space information stored in the tag 24 of the smart space. Further the wrist watch 25 is configured to share at least part of the information read from the tag with other devices of the personal space, that is, with the laptop 27 and the mobile phone 28. The wrist watch may use any suitable/available bearer for sharing the information to other devices, e.g. Bluetooth, Wibree, UWB, WUSB or RFID may be used. In one embodiment, the information is shared over a secure link between the wrist watch and the other device.

As near field communication is enabled only when communicating devices are close to each other, the communication may be considered inherently secure. Thereby information obtained over a near field connection may be considered to have a certain "level of trust", i.e. the smart space information obtained that way may be treated as "trusted" without additional security measures, which may make the system less complicated than some other systems. Additionally, authentication may be employed in the near field communication connection for added security.

After receiving the smart space information via the wrist watch, the laptop and the mobile phone are ready to use devices and services available in the smart space. For example, the user may connect to internet with the laptop (or with the mobile phone) using the WLAN access point 21 or use the wireless projector 22 and printer 23 with the laptop.

In an embodiment the wrist watch 25 may also convey information to the tag 24. For example information pertaining to the devices entering the space (devices of the personal space) and possibly also user information may be delivered to the tag.

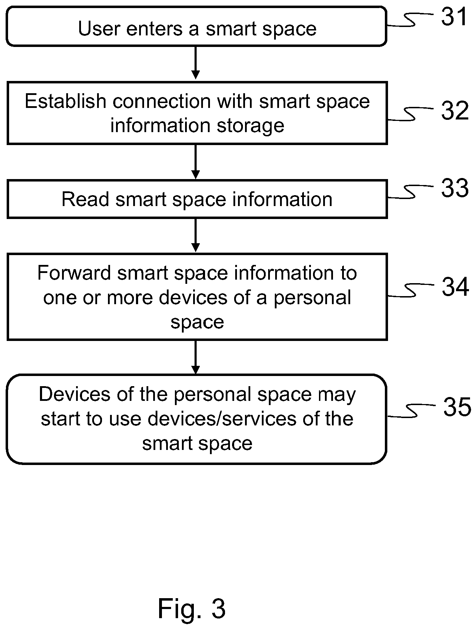

Figure 3 is a flow diagram illustrating a method in accordance with an embodiment.

First a user enters a smart space, phase 31. Responsive to entering the smart space, a personal device held by the user, e.g. a wrist watch or some other suitable device, detects a tag storing information pertaining to the smart space, e.g. the RFID tag 24 of Figure 2, and establishes a near field connection with the tag, phase 32. The connection establishment phase may include user authentication and security information sharing, but this is not mandatory.

Smart space information available in the tag is then read, phase 33, and forwarded to one or more devices of a personal space of the user, phase 34. In one embodiment the information that is read may be forwarded selectively such that each device of the personal space receives only information that may be useful for it. In another embodiment all available information may be shared with all devices of the personal space.

Thereafter the devices of the personal space may start to use devices/services of the smart space based on the received/forwarded information, phase 35.

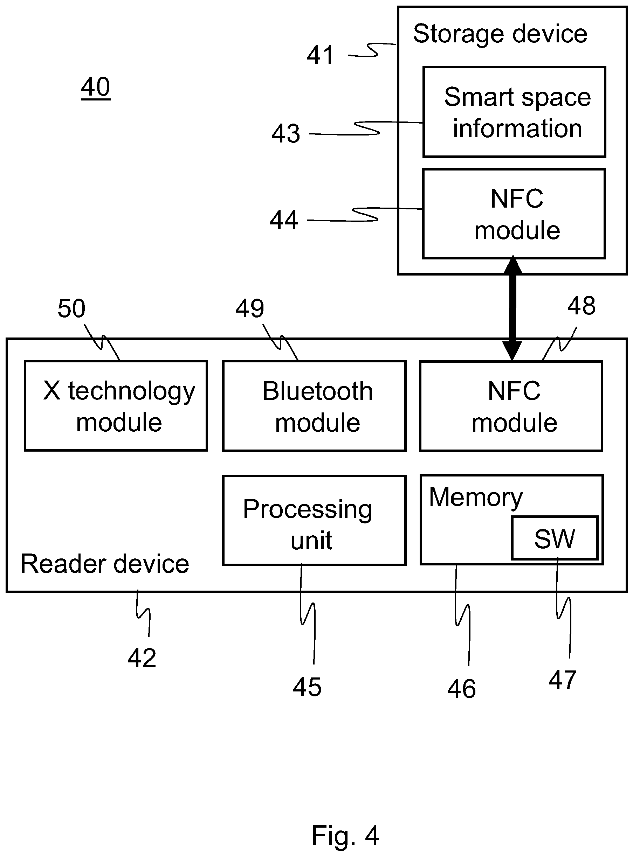

Figure 4 shows a system 40 comprising a reader device or apparatus 41 and a storage device 41. The reader device may be for example an RFID reader or interrogator and the storage device may be for example an RFID tag or transponder.

The storage device 41 comprises a storage area 43, which stores smart space information, and a near field communication module 44, which is configured to allow reading the smart space information stored in the storage area.

The storage device may be a passive, semi-passive or active tag. In case of passive tag, the power that is needed to operate and read/write the tag is transferred from the reader device to the tag by using magnetic or electromagnetic fields. For this reason the tag can operate without its own power supply (e.g. battery). In case of semi-passive tag, power needed for operating the tag is supplied from tag's own power source, but magnetic or electromagnetic field generated by the reader device is used for carrying data between the tag and the reader device in both directions. In case of active tag, the tag uses its own power supply for read and write operations and also for communication back to the reader device.

The reader device 42 comprises a processing unit 45 for controlling the device and a memory 46 including a computer program code or software 47. The processing unit may be for example a central processing unit (CPU), a general-purpose processor, a microprocessor, a digital signal processor, an application specific integrated circuit, a field programmable gate array, a microcontroller or a combination of such elements. The software 47 includes instructions for the processing unit 45 to control the device 42 such as an operating system and different computer applications. The software 47 may comprise instructions for controlling the device to provide some functionality of the invention.

The reader device 42 further comprises a near field communication unit 48 that may be used for reading for example the smart space information from the tag 41. In addition to reading information through the NFC unit the reader device may be further configured to also write information through the NFC unit.

Additionally, the reader device comprises a Bluetooth communication unit 49 that may be used for forwarding smart space information read from the tag 41 to one or more devices of a personal space. Still further the reader device may comprise some other communication unit, denoted herein as an X technology unit 50 that may be used for the same purposes as the Bluetooth unit 49 and/or for some other communication purposes. It must be noted that the unit 50 is not mandatory. Alternatively, the reader device might comprise still further communication units (not shown). For example Wibree, UWB, WUSB, WLAN or cellular communication unit may be included in the reader device.

One must note that the communication interfaces 48-50 may be used for other communication purposes than those mentioned above, as well. Additionally or alternatively, in an embodiment the reader device may comprise only the NFC communication interface and not the others shown in Figure 4. In that case the NFC unit is used for forwarding the smart space information as well.

The reader device 42 could comprise also a user interface (not shown), such as a display and some input device.

According to an embodiment the reader device 42 is some device that the users typically always carry with them, such a as wrist watch or some other personal device.

Various embodiments have been presented. It should be appreciated that in this document, words comprise, include and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented above, but that it can be implemented in other embodiments using equivalent means without deviating from the characteristics of the invention.

Furthermore, some of the features of the above-disclosed embodiments of this invention may be used to advantage without the corresponding use of other features. As such, the foregoing description should be considered as merely illustrative of the principles of the present invention, and not in limitation thereof. Hence, the scope of the invention is only restricted by the appended patent claims.

## Claims

1. An apparatus, comprising:
means for reading connectivity information regarding a wireless local area network, WLAN, access point (21) from a device storing the connectivity information, wherein reading the connectivity information is enabled when close to said device, wherein the connectivity information includes a service set identifier, SSID, and associated security parameters for connecting to said WLAN access point; and
means for forwarding at least part of the connectivity information over one or more secure short-range communication links to one or more devices of a personal space comprising one or more devices personally held by a user of the apparatus, wherein the one or more devices of the personal space are trusted devices that are known beforehand in view of said apparatus and that communicate with said apparatus over one or more secure short-range communication links.

2. The apparatus of claim 1, wherein the connectivity information is read over near field communication.

3. The apparatus of any preceding claim, wherein the means for reading the connectivity information comprises an NFC communication unit (48).

4. The apparatus of any preceding claim, wherein the means for forwarding the connectivity information over the one or more secure short-range communication links to one or more devices of the personal space comprises at least one of a Bluetooth communication unit (49), a Wibree communication unit, or a WLAN communication unit.

5. The apparatus of any preceding claim, wherein the one or more devices of the personal space comprises one or more devices from a group of devices consisting of a laptop computer, a mobile phone, a wrist watch, or a heart rate monitor.

6. The apparatus of any preceding claim, wherein said apparatus is part of said personal space.

7. A method in an apparatus, comprising:
reading (33) connectivity information regarding a wireless local area network, WLAN, access point from a device storing the connectivity information, wherein reading the connectivity information is enabled when close to said device, wherein the connectivity information includes a service set identifier, SSID, and associated security parameters for connecting to said WLAN access point; and
forwarding (34) at least part of the connectivity information over one or more secure short-range communication links to one or more devices of a personal space comprising one or more devices personally held by a user of the apparatus, wherein the one or more devices of the personal space are trusted devices that are known beforehand in view of said apparatus and that communicate with said apparatus over the one or more secure links.

8. The method of claim 7, wherein the wherein the connectivity information is read over near field communication.

9. The method of any of claims 7-8, wherein the one or more secure short-range communication links over which the connectivity information is forwarded comprises at least one of a Bluetooth communication link, a Wibree communication link, or a WLAN communication link.

10. The method of any of claims 7-9, wherein the one or more devices of the personal space comprises one or more devices from a group of devices consisting of a laptop computer, a mobile phone, a wrist watch, or a heart rate monitor.

11. The method of any of the claims 7-10, wherein the apparatus is part of said personal space.

12. A computer program comprising computer executable program code configured to enable an apparatus to forward at least part of received connectivity information over one or more secure short-range communication links to one or more devices of a personal space comprising one or more devices personally held by a user of the apparatus, wherein the one or more devices of the personal space are trusted devices that are known beforehand in view of said apparatus and that communicate with said apparatus over the one or more secure short-range communication links, wherein the received connectivity information comprises connectivity information regarding a wireless local area network, WLAN, access point and includes a service set identifier, SSID, and associated security parameters for connecting to said WLAN access point, and wherein the connectivity information is received from a device storing the connectivity information through reading the connectivity information when close to said device.

13. The computer program of claim 12, wherein the wherein the connectivity information is read over near field communication.

14. The computer program of any of claims 12-13, wherein the one or more secure short-range communication links over which the connectivity information is forwarded comprises at least one of a Bluetooth communication link, a Wibree communication link, or a WLAN communication link.

15. The computer program of any of claims 12-14, wherein the one or more devices of the personal space comprises one or more devices from a group of devices consisting of a laptop computer, a mobile phone, a wrist watch, or a heart rate monitor.

16. The computer program of any of the claims 12-15, wherein the apparatus is part of said personal space.

## Patentansprüche

1. Einrichtung, die Folgendes umfasst:
ein Mittel zum Lesen von Konnektivitätsinformationen, die den Zugangspunkt (21) eines drahtlosen lokalen Netzwerks, WLAN, betreffen, von einer Vorrichtung, auf der die Konnektivitätsinformationen gespeichert sind, wobei das Lesen der Konnektivitätsinformationen in der Nähe der Vorrichtung aktiviert ist, wobei die Konnektivitätsinformationen eine Dienstsatzkennung, SSID, und zugehörige Sicherheitsparameter für das Verbinden mit dem WLAN-Zugangspunkt beinhalten; und
ein Mittel zum Weiterleiten mindestens eines Teils der Konnektivitätsinformationen über eine oder mehrere sichere Kurzbereichskommunikationsverbindungen zu einer oder mehreren Vorrichtungen eines persönlichen Raums, die eine oder mehrere Vorrichtungen umfassen, die von einem Benutzer der Einrichtung persönlich gehalten werden, wobei die eine oder die mehreren Vorrichtungen des persönlichen Raums vertrauenswürdige Vorrichtungen sind, die aus Sicht der Einrichtung vorab bekannt sind und die mit der Einrichtung über eine oder mehrere sichere Kurzbereichskommunikationsverbindungen kommunizieren.

2. Einrichtung nach Anspruch 1, wobei die Konnektivitätsinformationen mittels Nahfeldkommunikation gelesen werden.

3. Einrichtung nach einem der vorhergehenden Ansprüche, wobei das Mittel zum Lesen der Konnektivitätsinformationen eine NFC-Kommunikationseinheit (48) umfasst.

4. Einrichtung nach einem der vorhergehenden Ansprüche, wobei das Mittel zum Weiterleiten der Konnektivitätsinformationen über die eine oder die mehreren sicheren Kurzbereichskommunikationsverbindungen zu einer oder mehreren Vorrichtungen des persönlichen Raums mindestens eines von einer Bluetooth-Kommunikationseinheit (49), einer Wibree-Kommunikationseinheit oder einer WLAN-Kommunikationseinheit umfasst.

5. Einrichtung nach einem der vorhergehenden Ansprüche, wobei die eine oder die mehreren Vorrichtungen des persönlichen Raums eine oder mehrere Vorrichtungen aus einer Gruppe von Vorrichtungen umfassen, die aus einem Laptopcomputer, einem Mobiltelefon, einer Armbanduhr oder einem Herzfrequenzmonitor besteht.

6. Einrichtung nach einem der vorhergehenden Ansprüche, wobei die Einrichtung Teil des persönlichen Raums ist.

7. Verfahren in einer Einrichtung, das Folgendes umfasst:
Lesen (33) von Konnektivitätsinformationen, die den Zugangspunkt eines drahtlosen lokalen Netzwerks, WLAN, betreffen, von einer Vorrichtung, auf der die Konnektivitätsinformationen gespeichert sind, wobei das Lesen der Konnektivitätsinformationen in der Nähe der Vorrichtung aktiviert ist, wobei die Konnektivitätsinformationen eine Dienstsatzkennung, SSID, und zugehörige Sicherheitsparameter für das Verbinden mit dem WLAN-Zugangspunkt beinhalten; und
Weiterleiten (34) mindestens eines Teils der Konnektivitätsinformationen über eine oder mehrere sichere Kurzbereichskommunikationsverbindungen zu einer oder mehreren Vorrichtungen eines persönlichen Raums, die eine oder mehrere Vorrichtungen umfassen, die von einem Benutzer der Einrichtung persönlich gehalten werden, wobei die eine oder die mehreren Vorrichtungen des persönlichen Raums vertrauenswürdige Vorrichtungen sind, die aus Sicht der Einrichtung vorab bekannt sind und die mit der Einrichtung über die eine oder die mehreren sicheren Verbindungen kommunizieren.

8. Verfahren nach Anspruch 7, wobei die wobei die Konnektivitätsinformationen mittels Nahfeldkommunikation gelesen werden.

9. Verfahren nach einem der Ansprüche 7 bis 8, wobei die eine oder die mehreren sicheren Kurzbereichskommunikationsverbindungen, über die die Konnektivitätsinformationen weitergeleitet werden, mindestens eines von einer Bluetooth-Kommunikationsverbindung, einer Wibree-Kommunikationsverbindung oder einer WLAN-Kommunikationsverbindung umfassen.

10. Verfahren nach einem der Ansprüche 7 bis 9, wobei die eine oder die mehreren Vorrichtungen des persönlichen Raums eine oder mehrere Vorrichtungen aus einer Gruppe von Vorrichtungen umfassen, die aus einem Laptopcomputer, einem Mobiltelefon, einer Armbanduhr oder einem Herzfrequenzmonitor besteht.

11. Verfahren nach einem der Ansprüche 7 bis 10, wobei die Einrichtung Teil des persönlichen Raums ist.

12. Computerprogramm, das einen computerausführbaren Programmcode umfasst, der dazu ausgelegt ist, es einer Einrichtung zu ermöglichen, mindestens einen Teil von empfangenen Konnektivitätsinformationen über eine oder mehrere sichere Kurzbereichskommunikationsverbindungen zu einer oder mehreren Vorrichtungen eines persönlichen Raums weiterzuleiten, die eine oder mehrere Vorrichtungen umfassen, die von einem Benutzer der Einrichtung persönlich gehalten werden, wobei die eine oder die mehreren Vorrichtungen des persönlichen Raums vertrauenswürdige Vorrichtungen sind, die aus Sicht der Einrichtung vorab bekannt sind und die mit der Einrichtung über die eine oder die mehreren sicheren Kurzbereichskommunikationsverbindungen kommunizieren, wobei die empfangenen Konnektivitätsinformationen Konnektivitätsinformationen umfassen, die einen Zugangspunkt eines drahtlosen lokalen Netzwerks, WLAN, betreffen und eine Dienstsatzkennung, SSID, und zugehörige Sicherheitsparameter zum Verbinden mit dem WLAN-Zugangspunkt beinhalten, und wobei die Konnektivitätsinformationen von einer Vorrichtung empfangen werden, auf der die Konnektivitätsinformationen mittels Lesen der Konnektivitätsinformationen in der Nähe der Vorrichtung gespeichert werden.

13. Computerprogramm nach Anspruch 12, wobei die wobei die Konnektivitätsinformationen über eine Nahfeldkommunikation gelesen werden.

14. Computerprogramm nach einem der Ansprüche 12 bis 13, wobei die eine oder die mehreren sicheren Kurzbereichskommunikationsverbindungen, über die die Konnektivitätsinformationen weitergeleitet werden, mindestens eines von einer Bluetooth-Kommunikationsverbindung, einer Wibree-Kommunikationsverbindung oder einer WLAN-Kommunikationsverbindung umfassen.

15. Computerprogramm nach einem der Ansprüche 12 bis 14, wobei die eine oder die mehreren Vorrichtungen des persönlichen Raums eine oder mehrere Vorrichtungen aus einer Gruppe von Vorrichtungen umfassen, die aus einem Laptopcomputer, einem Mobiltelefon, einer Armbanduhr oder einem Herzfrequenzmonitor besteht.

16. Computerprogramm nach einem der Ansprüche 12 bis 15, wobei die Einrichtung Teil des persönlichen Raums ist.

## Revendications

1. Appareil, comprenant :
un moyen pour lire des informations de connectivité concernant un point d'accès de réseau local sans fil, WLAN, (21) à partir d'un dispositif stockant les informations de connectivité, où la lecture des informations de connectivité est permise lorsqu'à proximité dudit dispositif, où les informations de connectivité incluent un identifiant d'ensemble de services, SSID, et des paramètres de sécurité associés pour se connecter audit point d'accès WLAN ; et
un moyen pour transférer au moins une partie des informations de connectivité sur une ou plusieurs liaisons de communication à courte portée sécurisées à un ou plusieurs dispositifs d'un espace personnel comprenant un ou plusieurs dispositifs détenus personnellement par un utilisateur de l'appareil, où les un ou plusieurs dispositifs de l'espace personnel sont des dispositifs de confiance qui sont connus au préalable au regard dudit appareil et qui communiquent avec ledit appareil sur une ou plusieurs liaisons de communication à courte portée sécurisées.

2. Appareil selon la revendication 1, dans lequel les informations de connectivité sont lues sur une communication en champ proche.

3. Appareil selon une quelconque revendication précédente, dans lequel le moyen pour lire les informations de connectivité comprend une unité de communication NFC (48).

4. Appareil selon une quelconque revendication précédente, dans lequel le moyen pour transférer les informations de connectivité sur les une ou plusieurs liaisons de communication à courte portée sécurisées à un ou plusieurs dispositifs de l'espace personnel comprend au moins l'une parmi une unité de communication Bluetooth (49), une unité de communication Wibree, ou une unité de communication WLAN.

5. Appareil selon une quelconque revendication précédente, dans lequel les un ou plusieurs dispositifs de l'espace personnel comprennent un ou plusieurs dispositifs parmi un groupe de dispositifs constitué d'un ordinateur portable, d'un téléphone mobile, d'une montre-bracelet, ou d'un moniteur de fréquence cardiaque.

6. Appareil selon une quelconque revendication précédente, dans lequel ledit appareil fait partie dudit espace personnel.

7. Procédé dans un appareil, comprenant :
la lecture (33) d'informations de connectivité concernant un point d'accès de réseau local sans fil, WLAN, à partir d'un dispositif stockant les informations de connectivité, où la lecture des informations de connectivité est permise lorsqu'à proximité dudit dispositif, où les informations de connectivité incluent un identifiant d'ensemble de services, SSID, et des paramètres de sécurité associés pour se connecter audit point d'accès WLAN ; et
le transfert (34) d'au moins une partie des informations de connectivité sur une ou plusieurs liaisons de communication à courte portée sécurisées à un ou plusieurs dispositifs d'un espace personnel comprenant un ou plusieurs dispositifs détenus personnellement par un utilisateur de l'appareil, où les un ou plusieurs dispositifs de l'espace personnel sont des dispositifs de confiance qui sont connus au préalable au regard dudit appareil et qui communiquent avec ledit appareil sur les une ou plusieurs liaisons sécurisées.

8. Procédé selon la revendication 7, dans lequel les informations de connectivité sont lues sur une communication en champ proche.

9. Procédé selon l'une quelconque des revendications 7 à 8, dans lequel les une ou plusieurs liaisons de communication à courte portée sécurisées sur lesquelles les informations de connectivité sont transférées comprennent au moins l'une parmi une liaison de communication Bluetooth, une liaison de communication Wibree, ou une liaison de communication WLAN.

10. Procédé selon l'une quelconque des revendications 7 à 9, dans lequel les un ou plusieurs dispositifs de l'espace personnel comprennent un ou plusieurs dispositifs parmi un groupe de dispositifs constitué d'un ordinateur portable, d'un téléphone mobile, d'une montre-bracelet, ou d'un moniteur de fréquence cardiaque.

11. Procédé selon l'une quelconque des revendications 7 à 10, dans lequel ledit appareil fait partie dudit espace personnel.

12. Programme informatique comprenant un code de programme exécutable par ordinateur configuré pour permettre à un appareil de transférer au moins une partie d'informations de connectivité reçues sur une ou plusieurs liaisons de communication à courte portée sécurisées à un ou plusieurs dispositifs d'un espace personnel comprenant un ou plusieurs dispositifs détenus personnellement par un utilisateur de l'appareil, où les un ou plusieurs dispositifs de l'espace personnel sont des dispositifs de confiance qui sont connus au préalable au regard dudit appareil et qui communiquent avec ledit appareil sur les une ou plusieurs liaisons de communication à courte portée sécurisées, où les informations de connectivité reçues comprennent des informations de connectivité concernant un point d'accès de réseau local sans fil, WLAN, et incluent un identifiant d'ensemble de services, SSID, et des paramètres de sécurité associés pour se connecter audit point d'accès WLAN, et où les informations de connectivité sont reçues en provenance d'un dispositif stockant les informations de connectivité par l'intermédiaire de la lecture des informations de connectivité lorsqu'à proximité dudit dispositif.

13. Programme informatique selon la revendication 12, dans lequel les informations de connectivité sont lues sur une communication en champ proche.

14. Programme informatique selon l'une quelconque des revendications 12 à 13, dans lequel les une ou plusieurs liaisons de communication à courte portée sécurisées sur lesquelles les informations de connectivité sont transférées comprennent au moins l'une parmi une liaison de communication Bluetooth, une liaison de communication Wibree, ou une liaison de communication WLAN.

15. Programme informatique selon l'une quelconque des revendications 12 à 14, dans lequel les un ou plusieurs dispositifs de l'espace personnel comprennent un ou plusieurs dispositifs parmi un groupe de dispositifs constitué d'un ordinateur portable, d'un téléphone mobile, d'une montre-bracelet, ou d'un moniteur de fréquence cardiaque.

16. Programme informatique selon l'une quelconque des revendications 12 à 15, dans lequel l'appareil fait partie dudit espace personnel.
